# EUROPÄISCHE PATENTSCHRIFT

(11) **EP 0 937 504 B1**
(45) Veröffentlichungstag und Bekanntmachung des Hinweises auf die Patenterteilung: **03.09.2003**
(21) Anmeldenummer: 99101453.1
(22) Anmeldetag: 27.01.1999
(51) Int. Cl.: B03B 9/06

(54) **Verfahren sowie Vorrichtung zur Durchführung des Verfahrens zur stofflichen Verwertung von Resthausabfällen**
Method and device for treating householdwaste
Procédé et dispositif pour la valorisation des déchets ménagers

(30) Priorität: 28.01.1998 DE 19803140
(43) Veröffentlichungstag der Anmeldung: 25.08.1999
(73) Patentinhaber: ZWECKVERBAND ABFALLBESEITIGUNG KAHLENBERG, 77975 Ringsheim (DE)
(72) Erfinder: Gibis, Georg, 77975 Ringsheim (DE); Fuchs, Dieter, 88289 Waldburg (DE); Kissinger, Bettina, 77955 Ettenheim (DE); Person, Georg Dr., 77975 Ringsheim (DE); Widmer, Christian, 4052 Basel (CH)
(74) Vertreter: Patentanwälte Eisele, Otten, Roth & Dobler

(56) Entgegenhaltungen:
- EP-A- 0 082 815
- EP-A- 0 148 375
- EP-A- 0 359 250
- WO-A-94/04277
- WO-A-97/20643
- FR-A- 2 376 703
- US-A- 4 610 396

## Beschreibung

Die Erfindung betrifft ein Verfahren sowie eine Vorrichtung zur Durchführung des Verfahrens zur stofflichen und energetischen Verwertung von Resthausabfällen.

### Stand der Technik:

Das Thüringer Ministerium für Landwirtschaft, Naturschutz und Umwelt hat einen Status-quo-Bericht unter dem Titel "mechanisch-biologische Restabfallbehandlungsanlagen (MBA) mit Stand 1/1996 herausgegeben. In dieser Literaturstelle sind eine Vielzahl vom im Betrieb befindlichen Restabfall-Behandlungsanlagen beschrieben. Verwiesen wird insbesondere auf das Funktionsschema der MBA-Düren, S. 58 der genannten Literaturstelle.

### Zunächst allgemeine Betrachtungen:

Im Gegensatz zur thermischen Abfallbehandlung, auch "Müllverbrennung" genannt, wird die mechanisch-biologische Abfallbehandlung auch als sogenannte "kalte Behandlung" bezeichnet.

Nach der derzeitigen Gesetzeslage werden Abfälle in
- Abfälle zur Verwertung und
- Abfälle zur Entsorgung
unterschieden. Die Grenzen hierfür sind fließend. Laut einer technischen Einleitung "Siedlungsabfall" (TASi) müssen "Abfälle zur Entsorgung" ab dem Jahre 2005 einen Glühverlust < 5 % aufweisen. Dieser Wert ist nach dem heutigen Stand der Technik nur durch eine thermische Behandlung (Müllverbrennung) erreichbar. Die thermische Behandlung widerspricht jedoch dem Gedanken der Kreislaufwirtschaft.

Nach dem sogenannten Kreislaufwirtschaftsgesetz sollen Abfälle grundsätzlich vermieden, verwertbare Abfälle verwertet und nicht vermeidbare und verwertbare Abfälle vor ihrer endgültigen Ablagerung so behandelt werden, daß sich ein Glühwert < 5 % dabei einstellt. Da die thermische Behandlung (Müllverbrennung) nach übereinstimmender Expertenmeinung langfristig sicherlich über DM 300,-- je Tonne kosten wird, und da die thermische Entsorgung im Widerspruch zu den Auflagen des Kreislaufswirtschaftsgesetzes steht, sind in jüngster Vergangenheit eine Vielzahl von Aktivitäten in Gang gekommen, mit dem Ziel, die Restmengen der thermischen Abfälle zu vermindern und gleichzeitig die TASi Ziele bis ins Jahr 2005 zu erreichen.

Nach den derzeitigen Erkenntnissen der mechanischen Restabfallaufbereitung sollten folgende Vorgaben erfüllt sein:
1. Abtrennen von Stör- und Problemstoffen, die den Verfahrensablauf behindern;
2. Wertstoffabschöpfung;
3. Konfektionierung des Restabfalls für die nachgeschalteten Behandlungsprozesse;
4. Stoffstromaufteilung für nachfolgende, stoffspezifische Behandlung, unter anderem stoffliche Verwertung, biologische und thermische Behandlung, direkte Deponierung.

Nach einer Bilanzierung einer Vielzahl von derartigen Anlagen ist festzustellen, daß in einer Vielzahl von Fällen grundsätzlich auf eine Störstoffentnahme verzichtet wird. Auf anderen Anlagen erfolgt zwar die Störstoffentnahme in den Anlieferungsbunkern mit Greifbaggern und Radladern, die in der Regel mit Greifschaufeln ausgestattet sind. Bei einigen weiteren Anlagen wird zusätzlich eine händische Störstoffentnahme betrieben. Dabei erfolgt die händische Entnahme von Störstoffen von einem sogenannten Leseband in aller Regel hinter einer Zerkleinerungsmaschine. Dieses Verfahren hat jedoch einen entscheidenden Nachteil.

Störstoffe, wie zum Beispiel elektronische Geräte, Autobatterien, Dosen oder Flaschen mit Lösungsmittelinhalten usw. können an händischen Lesebändern nicht mehr entnommen werden, wenn sie zuvor in einer Zerkleinerungsstufe in vielen Teilen zerkleinert bzw. aufgerisssen wurden.

Bezüglich der Praktizierung des Behandlungsschrittes "Wertstoffentnahme" wird in der Praxis folgendes praktiziert.

Die Wirkstoffentnahme beschränkt sich in den meisten Fällen im wesentlichen auf eine FE-Abscheidung (Metallabscheidung). Eine Vielzahl von bekannten Anlagen sind entsprechend ausgestattet. Auf einer im Betrieb befindlichen Anlage werden zwar Wertstoffe händisch sortiert, eine weitere Anlage verfügt hierfür über einen sogenannten Roboter, der über ein Fotoerkennungssystem Stör- und Wertstoffe abschöpfen soll. Dieses Verfahren hat sich jedoch als unpraktikabel erwiesen.

Nahezu sämtliche bekannten Verfahren zur mechanisch-biologischen Abfallbehandlung sind ansich artgleich aufgebaut. Das angelieferte Material wird meist im Flachbunkerbereich einer Sichtkontrolle unterzogen und danach einer Zerkleinerungsmaschine zugeführt. Diese Zerkleinerungsmaschine öffnet dabei nicht nur die Säcke, sie zerkleinert auch Stoffe, die in der nachfolgenden Biologie stören oder zusätzlichen Platz beanspruchen. Insbesondere behandelt und zerkleinert die Zerkleinerungsmaschine auch diejenigen 70 % des Abfalls, der ansich bereits kleinstückig angeliefert wird. Hierdurch werden die Zerkleinerungsmaschinen viel zu groß ausgelegt.

In einer nachgeschalteten Siebmaschine kann das organikreiche Feingut zwar abgesiebt werden. Das stark verschmutzte Grobgutgemisch wird jedoch derzeit noch deponiert. Zwar ist man versucht, dieses verschmutzte Grobgutgemisch als "Ersatzbrennstoff" zu vermarkten. Der Heizwert dieses Gemisches könnte sicher über 11.000 kJ/kg liegen. Da das Gemisch aber nichts anderes ist als der grobe Teil des angelieferten Abfalls, dürfte diesem Verfahren in Kürze eine gesetzliche Regelung entgegenstehen.

Das organikreiche Feingut wird bei bekannten Anlagen im allgemeinen der biologischen Stufe zugeführt.

Wie erwähnt, können die in einem solch aufwendigen Prozeß erzeugten Rottereste zwar noch bis ins Jahr 2005 deponiert werden. Danach bliebe jedoch bei unveränderter Gesetzeslage nur noch die thermische Behandlung (Müllverbrennung) zu immens hohen Kosten von nicht unter DM 300,-- je Tonne übrig.

Die vorstehenden Ausführungen lassen das anstehende Problem nur ansatzweise erkennen. Deswegen sind sich namhafte Fachleute darin einig, daß die mechanisch-biologische Aufbereitungsanlagen herkömmlicher Art zwar durchaus Teillösungen sein können auf dem Weg zu einer kostengünstigeren Abfallbewirtschaftung. Sie sind jedoch bei ihrem derzeitigen Stand der Technik nicht in der Lage, Restabfälle so zu behandeln, wie dies der Gesetzgeber in Zukunft vorschreiben wird. Dabei steht die werkstoffliche Verwertung verwertbarer Abfallinhalte im Vordergrund.

Aus der FR-A-2 376 703 (gleich DE 28 00 283 A1) ist eine Siebtrommel zum Sortieren von wiederverwertbaren Verpackungsmaterial bekannt geworden, welche mehrere Behandlungsstufen umfasst. Einem nicht perforierten Eingangsringbereich schließt sich eine mittlere Zylinderbereich an, der perforiert ist und Längsheber trägt. Dabei weisen die Sieböffnungen 9 einen Durchmesser in der Größenordnung zwischen 30 und 50 mm auf. Ein nachfolgender Ausgangsringbereich enthält ein Siebnetz mit Öffnungen, deren Größe Glasstücke in der Größe von Boden- Halsteilen von Flaschen passieren lässt.

Das Dokument US-A-4 610 396 zeigt eine Anlage zur Behandlung von Abfällen und insbesondere zur mechanischen Behandlung von kompostierbarem Hausmüll. Eine zugehörige Siebtrommel übernimmt die Aussiebung von Grobfraktionen.

Der Erfindung liegt die Aufgabe zugrunde, ein Verfahren sowie eine Vorrichtung zur Durchführung des Verfahrens zur stofflichen und energetischen Verwertung von Resthausabfällen vorzuschlagen, welches die Kosten der Entsorgung erheblich senkt und bei welchem konsequent auf die höchstmögliche Nutzung aller Inhaltsstoffe der angelieferten Abfälle wertgelegt wird.

Diese Aufgabe wird durch die Verfahrensansprüche sowie die Vorrichtungsansprüche gelöst. Dabei stellen die jeweiligen abhängigen Ansprüche vorteilhafte und zweckmäßige Weiterbildungen des Inhalts der jeweiligen unabhängigen Ansprüche 1 und 10 dar.

Die Erfindung verfolgt je nach individueller Zielsetzung eine Reihe von Verfahrenszielen, die auch bei schwankenden Input-Bedingungen bzw. Ausgangsbedingungen zuverlässig erreicht werden sollten. Hierfür wurden im Wesentlichen vier Anlagebereiche optimal aufeinander abgestimmt, die sich wie folgt darstellen:

Die sogenannten Resthausabfälle werden zunächst in einer "Grobgutaufbereitung" behandelt, wobei diese einer Feinstoff-Grobstofftrennung unterzogen werden. Dabei werden die abgetrennten Grobstoffe in Stör- und Wertstoffe aufgeteilt.

In einer weiteren "biologischen Stufe" werden die Feinstoffe einer biologischen Behandlung unterzogen, bei welcher der organische Anteil in Biogas umgesetzt wird und die verbleibenden Reststoffe nach mechanischer Entwässerung einer Trocknung unterzogen werden.

Die trockenen Reststoffe oder Rottereste werden in einer "Feingutaufbereitung" in einer Reihe von weiteren mechanischen Aufbereitungsschritten weiterverarbeitet, wobei Wertstoffe und Inertstoffe getrennt ausgeschleust werden. Dabei werden höherwertige Ersatzbrennstoffe zur energetischen Verwertung hergestellt und die Inertstoffe ausgetragen. Ziel der Erfindung ist es demzufolge, die verbleibenden Reststoffe zur thermischen Behandlung zu minimieren.

Durch die Kombination bewährter Aggregate sowie neuer Entwicklungen konnte eine Verfahrenstechnik entwickelt werden, die in dieser Form völlig neu ist und überraschend gute Ergebnisse liefert. Dabei beruht der Vorteil gegenüber bekannten Verfahren nicht nur in der Tatsache, daß nahezu 100 % der angelieferten Abfälle einer Wiederverwertung zugeführt werden können. Vielmehr liegt der Vorteil insbesondere auch darin, daß das erfindungsgemäße Verfahren auch unter Einbeziehung aller denkbaren biologischen Stufen funktionsfähig ist. Hierfür dürfte für die Zukunft eine Verfahrenstechnik vorliegen, die durch Produktion von Wärme und elektrischer Energie aus dem Abfall nahezu ohne Abfallgebühren auskommt.

Das erfindungsgemäße Verfahren stellt eine Optimierung aus bekannten und neuen Verfahrensschritten dar, wobei nicht nur auf einen biologischen Prozeß wertgelegt, sondern auf die Funktionalität einer Vielzahl von Anlagenbereichen wertgelegt wird.

Die Erfindung wird näher anhand von Ausführungsbeispielen erläutert, die vorzugsweise in einem Flußdiagramm sowie Zeichnungen dargestellt und in der nachfolgenden Beschreibung näher erläutert sind. Dabei zeigen
- Fig. 1: ein Flußdiagramm zur Erläuterung der Verfahrensschritte in einer erfindungsgemäßen Anlage,
- Fig. 2: eine nähere Darstellung einer Multifunktionstrommeln, insbesondere für den Verfahrensschritt "Grobgutaufbereitung",
- Fig. 2a: den in die Multifunktionstrommel integrierten Sichter.

### Beschreibung der Ausführungsbeispiele:

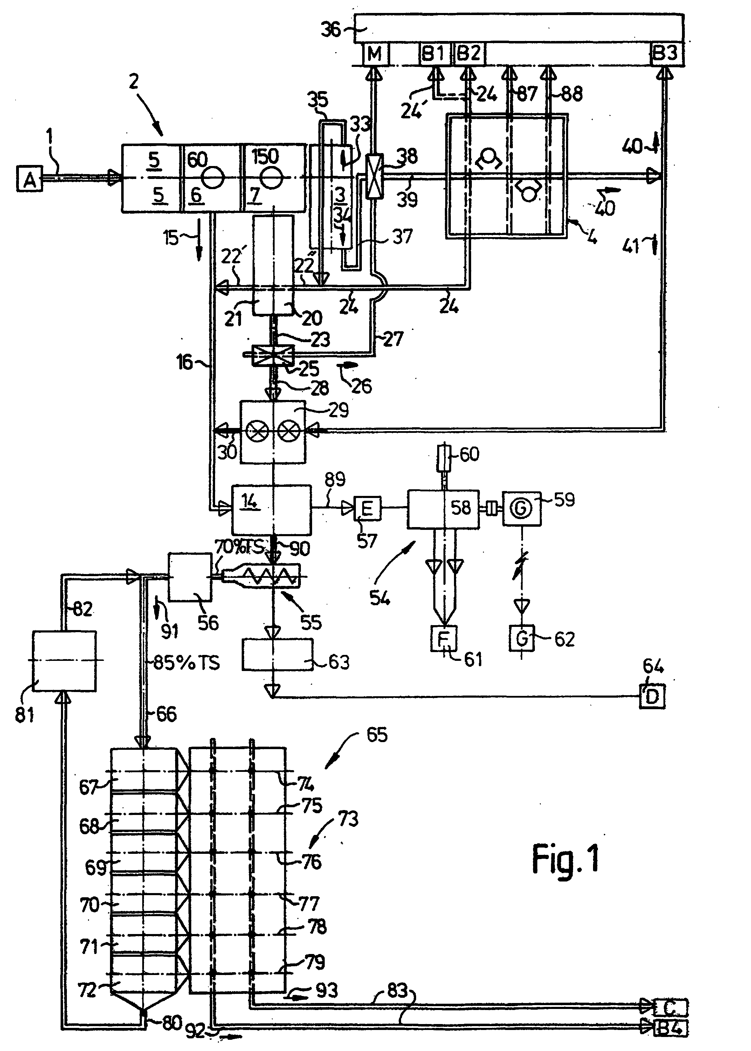

Wie es sich aus der Darstellung des Verfahrensfließbilds nach Fig. 1 ergibt, beinhaltet das erfindungsgemäße Verfahren mit seinen zugehörigen Vorrichtungen zunächst nur ein schematisch angedeutetes Beschickungssystem 1, welches vom einfachen Aufgabeband bis zum vollautomatischen Kransystem sämtliche Variationen zur Zuführung des zu behandelten Abfalls enthalten kann. Dabei ist das Ausgangsmaterial ein unzerkleinerter Resthausabfall, wie er in der sogenannten grauen Tonne im Haushalt anfällt.

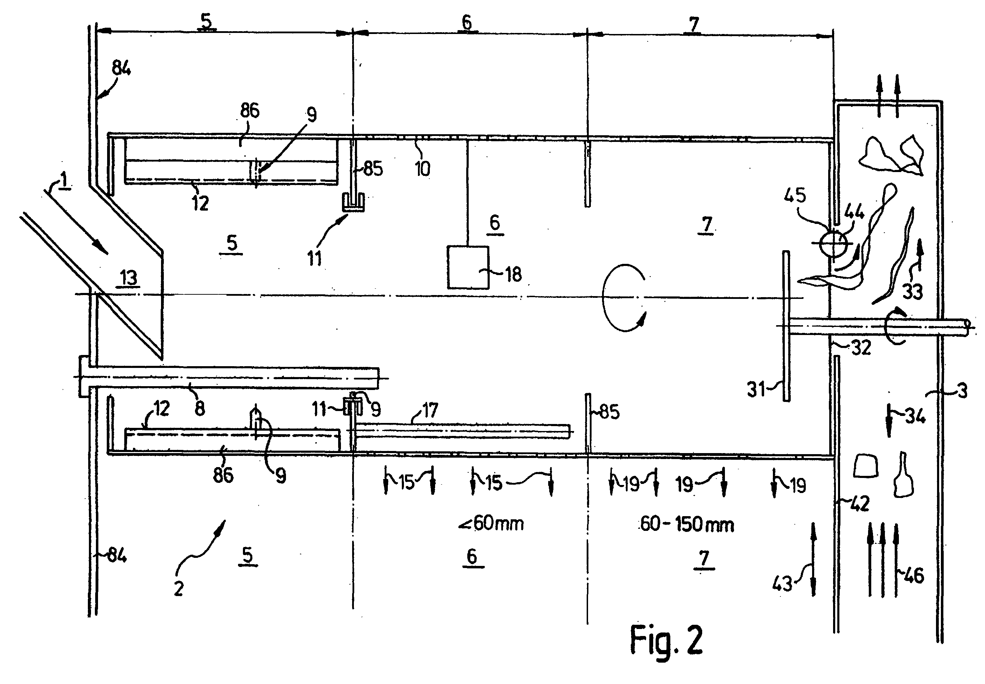

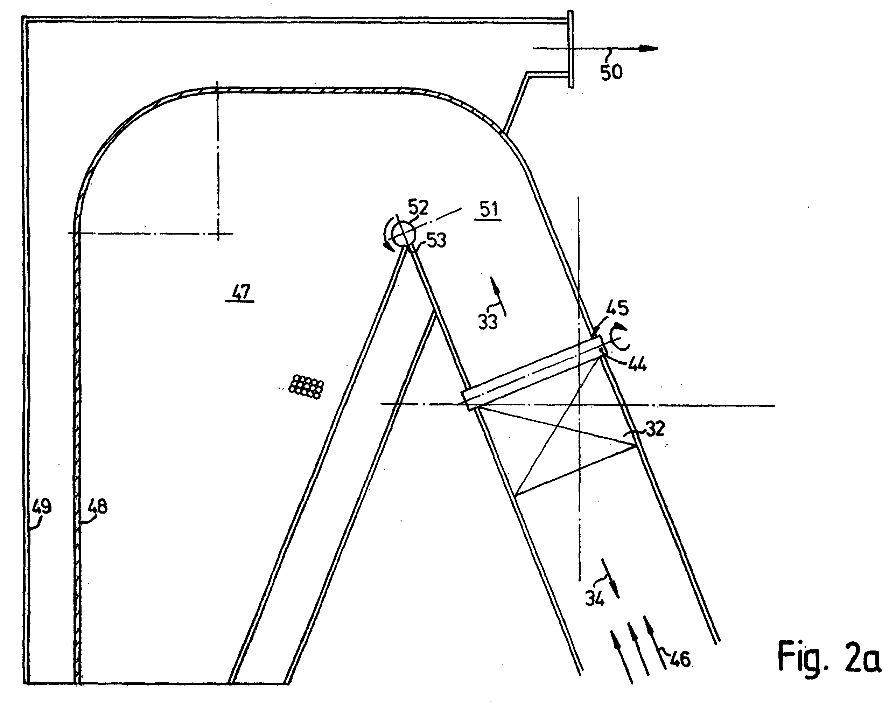

Dem Beschickungssystem 1 nachgeschaltet ist eine sogenannte Multifunktionstrommel 2, wie sie näher auch in den Figuren 2, 2a dargestellt ist.

Bereits in der beginnenden Grobgutaufbereitung fallen im erfindungsgemäßen Verfahren ganz wesentlich Entscheidungen. Unter dem Gesichtspunkt, daß die Entfernung von Störstoffen und das Heraussortieren von Wertstoffen nur dann funktioniert, wenn diese Abfallinhalte nahezu unversehrt einen nachgeschalteten Kontroll- bzw. Sortierstand 4 erreichen, wird der zu behandelnde Rohabfall nicht zerkleinert, sondern zunächst schonend in der "Multifunktionstrommel 1" mit nachfolgender Sichtereinheit 3 behandelt.

Die Multifunktionstrommel 2 besteht aus drei Segmenten oder Sektionen 5-7 wie sie in Fig. 1 und 2 symbolisch dargestellt sind. In der ersten Sektion 5 wird das einlaufende Materialgemisch durch die in Fig. 2 dargestellten Einbauten aufgeschlossen und damit siebfähig gemacht. Diese noch später näher zu erläuternden Einbauten sind beispielsweise als stehende Stauleisten 8, selbstreinigende Reißdorne 9 und/oder am Trommelmantel 10 befestigte flexible Abstreifer 11 wie Drahtseile, Ketten oder ähnliches ausgebildet, die eine schonende Öffnung und Entleerung beispielsweise von Abfallsäcken ermöglichen. Wie aus Fig. 2 ersichtlich können die Reißdorne 9 durch eine Falleiste 12 selbstreinigend ausgebildet sein, das heißt, in der unteren Stellung der Reißdorne fallen die Falleisten aufgrund ihres Eigengewichtes nach unten und geben den Dorn frei, während sie in der oberen Stellung den Reißdorn 9 abdecken und somit das an ihm haftende Material abstreifen.

Der Trommeleinlauf 13 der rotierenden Multifunktionstrommel 2 erfolgt durch eine schräge Zulauföffnung. Hier ist es insbesondere wichtig, daß eine Abfallbehandlung z. B. von vorhandenem Behälterglas derart schonend erfolgt, daß dieses zusammen mit den Hausabfällen weiterverwertet werden kann, das heißt, einer Wiederverwertung zuführbar ist.

In der zweiten Sektion 6 wird eine organikreiche Feinfraktion, d. h. eine Fraktion etwa ≤ 60 mm abgesiebt und direkt einer biologischen Stufe 14 zugeführt. Diese organikreiche Feinfraktion ist mit Pfeil 15 dargestellt. Die zugehörige Förderleitung ist mit Bezugszeichen 16 gekennzeichnet. Die Fig. 2 zeigt zusätzlich in der mittleren Sektion 6 eine umlaufende Räumleiste 17 sowie umlaufende Räumelemente 18.

Der zweiten Sektion 6 in der Multifunktionstrommel 2 nachgeschaltet ist eine dritte Sektion 7, die den Problemstoff der sogenannten "Windelfraktion" behandelt. Diese Fraktion kann z. B. ca. 10 % des aufgegebenen Resthausabfalls ausmachen. In dieser dritten Sektion 7 wird demzufolge die "Windelfraktion" mit einer Siebgröße zwischen 60 - 150 mm abgesiebt, wobei die Windeln jeweils geöffnet werden müssen. Die in der dritten Sektion 7 abgenommene "Windelfraktion 19" wird in einer dieser Sektionsstufe 7 nachgeschalteten Sichter 20 oder auch einer Schrägsortiermaschine 21 in Leichtfraktionen 22, z. B. Folien und Schwerfraktionen 23, z. B. Windeln aufgeteilt. Die Ankopplung beispielsweise eines Steigrohrsichters 20 an die dritte Sektion 7 erfolgt dabei ohne einen zusätzlichen Zwischenförderer.

Dabei wird die im Steigrohrsichter 20 gebildete Leichtfraktion 22 entweder direkt über die Förderleitung 16 der Biologie zugeführt (Pfeil 22') oder als Wertstoff (Pfeil 22'') über die Leitung 24 gegebenenfalls über das Sortierband 4 ausgetragen (B1, B2). Die Sichter-Schwerfraktion 23 wird über eine Vorrichtung 25 entschrottet, wobei der mit Pfeil 26 ausgetragene Schrott über die Leitung 27 transportiert wird. Die restliche Schwerfraktion (Pfeil 28) wird einer Zerkleinerungsvorrichtung 29 und nachfolgend (Pfeil 30) der biologischen Stufe 14 über die Leitung 16 zugeführt.

Der dritten Sektion 7 der Multifunktionstrommel 2 unmittelbar nachgeschaltet ist die Sichtereinheit 3. Über ein angetriebenes Schlagkreuz 31 (siehe Fig. 2) gelangt das von der Sektion 7 ausgetragene Grobgut über die verstellbare Öffnung 32 in den nachfolgenden Steigrohrsichter 3 und wird dort wiederum in eine leichte Fraktion 33 und eine schwere Fraktion 34 zerlegt. Die leichte Fraktion 33 wird über die in Fig. 1 angedeutete Leitung 35 wiederum über die Leitung 24 bzw. Leitung 16 entweder der biologischen Stufe 14 zugeführt oder ebenso wie die Leichtfraktion 22'' aus dem Sichter 20 gegebenenfalls über den Sortierplatz 4 als Wertstoff ausgetragen. Die am Sortierplatz 4 gesammelten Wertstoffe werden als Monostoffe auf ein Sammelband 36 intermittierend aufgegeben und von dort aus Monobunkern zugeordnet.

Das aus der Sichtereinheit 3 ausgetragenen Schwergut 34 gelangt über die Leitung 37 zu einer Entschrottungsvorrichtung 38 mit Schrottanteil (M) und wird im Sortierstand 4 ebenfalls auf Wertund Störstoffe nachsortiert (Leitpfad 39) und danach entweder als Wertstoff bzw. Ersatzbrennstoff entsprechend dem Pfeil 40 ausgetragen (B3) oder über die Leitung 41 dem Zerkleinerer 29 zugeführt und anschließend über die Leitung 16 der biologischen Stufe beigegeben.

Die in Fig. 2, 2a dargestellte Sichtereinheit 3 besitzt eine Sichterseitenwandung 42, die gemäß der Pfeildarstellung 43 als verstellbares Staublech ausgebildet ist, um die Eintrittsöffnung 32 zu beeinflussen. Die Eintrittsöffnung 32 besitzt in ihrem oberen Bereich eine Drehwalze 44, die es verhindert, daß sich Gut an der dahinterliegenden Kante 45 absetzt. Gemäß der Darstellung in Fig. 2a , wird die leichte Fraktion 33 aufgrund der von unten nach oben zugeführten Zuluft 46 nach oben ausgetragen, und gelangt in eine nachfolgende Absetzkammer 47, die aus einem Lochblech 48 besteht. Durch einen die Absetzkammer 47 umgebendes Gehäuse 49 kann die Umluft 50 entweichen.

Auch im Übergangsbereich zwischen Absetzkammer 47 uns Sichterkanal 51 befindet sich wiederum eine weitere Drehwalze 52, die ein Absetzen von Folien oder dergleichen an der Umlenkkante 53 verhindert. Das der Zuluft 46 entgegentretende Schwergut 34 wird nach unten ausgetragen und in Leitung 37 weitergeführt. Nähere Angaben hierzu folgen.

Anstelle des Sichters 20 kann auch eine Schrägsortiermaschine 21 eingesetzt werden, wie sie beispielsweise aus dem Bezner-Patent EP 0 123 825 oder der EP 0 174 967 bekannt ist. Eine Nachsortierung auf Stör- und Wertstoffe kann jedoch auch mit einer ähnlichen Einrichtung aus dem Stand der Technik erfolgen.

Der der Anlage zugeordnete Sortierstand 4 kann ähnlich wie das Bezner-Patent Nr. 44 16 457 ausgebildet sein. Auch hier sind ähnlich Varianten möglich. Insbesondere kann der Sortierstand so ausgebildet sein, daß neue Sortier-Systeme, wie z. B. Robotertechniken eingesetzt werden, sofern sie die entsprechenden Aufgaben erfüllen können. Dabei kommen dem Kontroll- und Sortierstand 4 im vorliegenden Verfahren eine große Bedeutung zu, da ohne Kontrolle bzw. ohne Aussortierung von Störstoffen ein qualitätsgesicherter Ersatzbrennstoff nicht herstellbar ist. Durch die Entnahme von Störstoffen entsteht ein weitestgehend "sauberes" Grobgutgemisch, dessen Heizwert bei ca. 20.000 kJ/kg liegt. Dieses Grobgutgemisch kann je nach Marktlage entweder direkt vermarktet werden, und zwar als qualitätsgesicherter, heizwertreicher Ersatzbrennstoff oder er kann mit einem Ersatzbrennstoff aus der Feingutaufbereitung der vorliegenden Erfindung vermischt werden.

Maßgeblich für die wirksame Funktion der Multifunktionstrommel 2 ist auch die "Langzeitbehandlung" des darin zu behandelnden Abfalls. Dabei wird eine lange Verweildauer von ca. 1 bis 3 Stunden angestrebt. Durch diese Langzeitbehandlung in der Multifunktionstrommel ist sowohl die Sichter-Leichtfraktion als auch das Schwergutgemisch soweit abgetrocknet und absolut sauber, daß eine Pelletierung in herkömmlichen Maschinen möglich ist.

Die der Multifunktionstrommel 2 unmittelbar nachgeschaltete Sichtereinheit 3 ist als Steigrohrsichter ausgebildet. Dabei entspricht dieser Steigrohrsichter in seinem Aufbau und in seiner Funktion ansich klassischen Schwerkraftsichtern. Abweichend von diesen Geräten ist dieser Steigrohrsichter jedoch konsequent auf die besonderen Eigenschaften und Inhalte von Resthausabfällen ausgerichtet. Während beispielsweise der Materialaustrag bei klassischen Schwerkraftsichtern über wenigstens eine Zellenradschleuse oder eine ähnliche Einrichtung erfolgt, werden alle im Steigrohrsichter 3 der vorliegenden Erfindung hergestellten Fraktionen drucklos im freien Fall nach unten ausgetragen.

Lange Folien, Bänder, Schnüre und ähnliche Abfallinhalte, aber auch die nicht vollständig zu vermeidenden "Zöpfe", werden durch dieses Konstruktionsmerkmal problemlos und störungsfrei bewältigt. Das System wird dabei im Umluftbetrieb gefahren, wie dies in Fig. 2a dargestellt ist. Herkömmlich Abscheider und die daran anschließende Filtertechnik werden dadurch unnötig.

Die Prozeßluft entspannt sich in der großflächig aus den Lochblechen 48 hergestellten Absetzkammer 47. Die mitgerisssene Sichterleichtfraktion 33 fällt dadurch drucklos nach unten in ein nachfolgendes Transportsystem. Da die Absetzkammer vollständig von einer Abzugshaube 49 umfaßt ist, erübrigen sich aufwendige Filtertechniken. Sämtliche kritischen Einlaufbereiche sowie Leit- und Verteilerbleche sind mit den angetriebenen glatten Walzen 44, 52 ausgerüstet. Hierdurch wird die unerwünschte Ablagerung von Abfallinhalten sicher vermieden.

Wie dem Verfahrensfließbild nach Fig. 1 weiterhin zu entnehmen ist, umfaßt die biologische Stufe eine biologische Behandlung sowie eine nachgeschaltete Biogasanlage 54. Dabei werden die über die Leitung 16 zugegebenen Feinstoffe einer biologischen Behandlung unterzogen, bei welcher der organische Anteil in Biogas umgesetzt wird und die verbleibenden Reststoffe nach einer mechanischen Entwässerung in einer Entwässerungsstufe 55 und einer anschließenden Trocknungsstufe 56 nachbehandelt werden.

Die biologische Stufe 14 kann grundsätzlich nach Art des Gegenstandes der DE 196 02 489 A1 (Wittmer) ausgebildet sein. Prinzipiell finden in den biologischen Stufe 14 folgende Vorgänge statt.

Durch die streng aerob ablaufenden Hydrolyse werden die geschlossenen Zellen der Organgik des Abfalls durch enzymatische Einwirkung aufgebrochen und das Zellwasser wird freigesetzt. Dadurch kann beim nachfolgdenden Auspreßvorgang mit weniger Energieaufwand wesentlich mehr Wasser freigesetzt werden, als bei Abfällen, welche aus einer anaeroben Vergährung stammen. Bei der anaeroben Vergährung mit einer Behandlungszeit von ca. 20 Tagen unter Luftabschluß beträgt der Trockensubstanzanteil nach dem Preßvorgang maximal 40 % - bis 45 % TS. Demgegenüber beträgt der Trockensubstanzgehalt (TS) bei der zuvor erwähnten Hydrolyse mit einer Behandlungszeit von ca. 2 Tagen bei gleicher Gasausbeute und Abbau von organischer Masse nach dem Preßvorgang zwischen 60 % bis maximal 70 % TS.

Das bedeutet, daß z. B. das Ausgangsmaterial des Hydrolyseprozesses - auch Perkulation genannt -, wesentlich schneller auf die geforderten 85 % TS (Trockensubstanz) biologisch oder thermisch nachgetrocknet werden kann, weil ja gegenüber dem Vergärungspreßgut viel weniger Wasser durch z. B. Verdunstung entzogen werden muß, und zwar bei der Vergärung + 40 % bei der Perkulation + 15 %.

Der Wasserentzug durch Trocknung in der Trocknungsstufe 56 kann auf mehrere Arten erfolgen:
a) biologische Trocknung durch ein nachgeschaltetes Nachrotteverfahren (Kompostierung), bei welchem mittels Eigenerwärmung mit einem hohen Luftdurchsatz dem Gärrest Wasser entzogen wird, oder
b) durch thermische Trocknung, indem externe Wärme zugeführt wird z. B. (Abwärme von der Gasmotorgeneratoranlage). Hier können verschiedene bekannte Techniken eingesetzt werden, wie:
   - Drehtrommeltrockner
   - Bandtrockner
   - Scheibentrockner usw.

In der Summe ist der Energieaufwand bei beiden Systemen etwa vergleichbar, denn bei der Kompostierung dauert der Prozeß ca. 14 Tage mit einem hohen Luftdurchsatz. Die thermische Trocknung dauert z. B. ca. 3 Stunden mit Wärmeeintragung, allerdings bei höherem Temperaturniveau. Bei beiden Systemen muß beides Mal pro Liter Wasserverdampfung mechanische oder thermische und/oder eine kombinierte Energie eingesetzt werden, die Minimum 1,3 kwh beträgt. Für die Entscheidung, welches System eingesetzt werden sollte, sind örtliche Verhältnisse und Zeitabläufe maßgebend.

Vom Biogas aus der biologischen Stufe wird maximal 40 % benötigt, um den gesamten biologisch/mechanischen Prozeß durchführen zu können. Die Überschußenergie von ca. 60 % kann extern verwendet werden, wozu die Biogasanlage 54 dient. Diese besteht z. B. aus einem Gasbehälter 57, einem nachgeschalteten Motor 58 und einem nachgeschalteten Gasmotor 59. Der Motor 58 entwickelt Abgase 60 und produziert bei seiner Kühlung Warmwasser 61. Die entstehende elektrische Energie G ist mit Bezugszeichen 62 angedeutet.

In der, der biologischen Stufe 14 zugeordneten Abwasserreinigungsanlage kann je nach Einleitungsanforderungen das Abwasser in verschiedenen Behandlungsstufen aufbereitet werden. Diese Abwasserreinigungsanlage 63 ist der Entwässerungsstufe 55 nachgeschaltet und führt entweder zu einer Einleitung in die Kanalistation (indirekt Einleitung). Es kann jedoch auch eine Aufbereitung zur Einleitung in ein öffentliches Gewässer (Vorfluter) vorgesehen sein. Dies Abwasserentsorgung "D" ist mit Bezugszeichen 64 angedeutet.

Der biologischen Behandlung mit nachfolgender Entwässerung und Trocknung folgt eine sogenannte "Feingutaufbereitung". Dabei werden die trockenen Reststoffe einer Anzahl weiteren mechanischen Aufbereitungsschritten unterzogen und dabei Wertstoffe und Inertstoffe d. h. Stoffe ohne Brennwert wie Sand, Steine usw. getrennt ausgeschleust. Es werden insbesondere Ersatzbrennstoffe als höherwertiger Brennstoff gegenüber dem Ausgangsstoff zur energetischen Verwertung hergestellt. Ziel ist es, die verbleibenden Reststoffe aus der Sortieranlage 4 zur thermischen Behandlung zu minimieren.

Die "Feingutaufbereitung" erfolgt in einer Aufbereitungsanlage 65, die über die Leitung 66 beschickt wird. Dabei werden die z. B. durch den Gär- und Rotteprozeß weitgehend abgetrockneten Rottereste einer kompakten Sieb- und Sichterbatterie zugeführt. In diesem Anlageteil erfolgt eine nahezu vollständige Abtrennung der mineralischen Inhalte (Inertstoffe). Würde dieser innerte Anteil im Wertstoffrest verbleiben, wäre auch durch eine künstliche Trocknung der für Ersatzbrennstoffe vom Gesetzgeber vorgeschiebene untere Heizwert von 11.000 kJ/kg nicht zu erreichen.

Die kompakte Sieb- und Sichterbatterie der Feingutaufbereitungsanlage 65 kombiniert, hintereinander geschaltete Plansiebe 67 - 72 und eventuell zugehörige Setztische mit einem nachgeschalteten Sichtersystem 73. Dabei ist dieses Sichtersystem prinzipiell gleich aufgebaut, wie die Sichtstufe 3 der zuvor erläuterten Multifunktionstrommel 2. Das Sichtsystem arbeitet ebenfalls im Umluftbetrieb. Zusätzliche Filter sind nicht erforderlich. Sämtliche Fraktionen werden weitgehend drucklos im freien Fall nach unten ausgetragen. Dies stellt eine optimale Möglichkeit dar, Haushaltsabfälle auch dann störungsfrei zu behandeln, wenn Schnüre, Bänder, Tonträger, Ketten, Seile oder dergleichen darin enthalten sind. Solche Inhaltsstoffe blockieren jede Zellenradschleuse, ohne die herkömmliche Sichtsysteme nicht funktionieren. Das Sichtsystem 73 besteht wiederum aus einzelnen Sichtern 74 - 79, die in Fig. 1 nur schematisch dargestellt sind und die jeweils dem Plansieb 67 - 72 zugeordnet sind. Dabei sieben die Plansiebe 67 - 72 fortlaufend immer feinere Bestandteile aus der durch das Sieb durchfallenden Fraktion heraus und führen diese nachfolgend zu den Sichtern 74 - 79. Das Ausgangsprodukt 92, 93 der Sichter ist deshalb in der verbleibenden Korngröße unterschiedlich ausgebildet.

Der Reststrom aus der Plansiebanlage 67 - 72 wird über die Leitung 80 einem nachgeschalteten Zerkleinerer 81 zugeführt und schließlich über die Leitung 82 in die Leitung 66 und damit in den Kreislauf Feingut-Aufbereitungsanlage 65 zurückgeführt.

Die in der Feingutaufbereitung dem Sichtsystem 73 entnommenen bzw. anfallenden Stoffströme bestehen z. B. aus FE-Metallen (Abscheider nicht näher dargestellt), Ersatzbrennstoffen (92, B4) und eine mineralische Fraktion (93, C) (Sand, Steine usw.) als Reststoffe 93. Diese werden von einem zentralen Fördersystem 83 erfaßt und einer Verladung zugeführt.

Die "Feingutaufbereitung" ist konsequent nach den für das Sieben und Sichten geltenden physikalischen Grundlagen aufgebaut. Dabei können Plansiebe der Baureihe BSM der Firma Bezner und Setztische z. B. der Firma Trennso-Technik verwendet werden.

Sowohl in der Multifunktionstrommel 2 als auch in den Plansieben 67 - 72 kann es zu störenden Einflüssen durch sogenannte "Zopfbildung" kommen. Bevorzugt trifft dies für die Siebtrommeln 2 zu.

Solche Zöpfe entstehen dadurch, daß sich um eine Seele Schnüre, Seile, Ketten, Bänder und andere Abfallinhalte herumwickeln. Je nach Festigkeit des "Tragseils" entstehen so Zöpfe von mehreren 100 kg Gewicht. Der Beginn einer solchen Zopfbildung ist grundsätzlich gleich. Die "Seele" verfängt sich in der Siebmaschine. Das lose Ende liegt auf dem Trommelkörper auf und dreht sich mit der Umfangsgeschwindigkeit der Trommel mit. Dabei beträgt die Drehgeschwindigkeit des Zopfes ein Vielfaches der Trommel aufgrund des kleineren Durchmessers. Es kommt daher zum "Aufspinnen" weiterer Abfallinhalte und schlußendlich zu Zöpfen von mehreren Metern Länge und Gewichten über 100 kg. Solche Zöpfe führen in nachfolgenden Prozeßschritten ganz zwangsläufig zu Störungen bzw. Anlagenstillständen.

Wie bereits erwähnt, können insbesondere bei der Multifunktionstrommel 2 durch geeignete Einbaumaßnahmen in der Siebtrommel solche Zopfbildungen weitgehend vermieden oder zumindest stark reduziert werden. Zöpfe, die trotzdem entstehen, werden über den nachfolgenden Sichter 3 als Schwerfraktion 34 ausgetragen und in der nachfolgenden Kontroll- bzw. Sortierstation 4 ausgeschleust.

Die Einbauten in der Multifunktionstrommel sind verschiedener Art.

Wie bereits zu Fig. 2 beschrieben, sind zunächst stehende Stauleisten 8 vorgesehen, die am Trommelrahmen 84 feststehend befestigt sind. Dabei ragt die Stauleiste 8 bis zu 2 m in das Trommelinnere hinein und streift z. B. die von den Reisdornen 9 erfaßten Abfallsäcke ab. Der Abfallinhalt wie z. B. Folien, Papier und Textilien usw. wird aufgelockert und vom Haftkorn befreit.

Zwischen den Sektionen 6 und 7 können zusätzlich sogenannte umlaufende Stauscheiben 85 vorgesehen sein, die am Trommelmantel 10 befestigt sind.

Die in Fig. 2 dargestellten selbstreinigenden Reisdorne 9 befinden sich ebenfalls am Trommelmantel 10. Dabei wird ein dornenbewährter Flachstahl 86 mit der u-förmig ausgebildeten Falleiste 12 versehen, die als eine Art "Reinigungsleiste" dient. Im unteren Durchgangsbereich liegt die Reinigungsleiste 12 auf dem Flachstahl auf, so daß der Reißdorn die Reinigungsleiste überragt und damit aktiv ist. Im oberen Durchgangsbreich fällt die jeweilige Reinigungsleiste durch ihr Eisengewicht in ihre Halterung. Der Reißdorn 9 wird damit abgedeckt. Hängengebliebene Abfallinhalte werden dadurch abgestreift.

Die Reißdorne 9 verhindern ebenfalls die Zopfbildung dadurch, daß solche Zöpfe unmittelbar nach ihrer Entstehung aus dem Abfallstrom herausgehoben werden, was durch die Stauscheiben 85 unterstützt wird. Ein "Aufspinnen" anderer Abfallinhalte wird dadurch weitestgehend vermieden.

Zur Vermeidung der Zopfbildung sind in der Multifunktionstrommel zusätzlich Reinigungsseile und Reinigungsketten 18 oder ähnlich Bandelemente vorgesehen, die einseitig entweder am Trommelrahmen (feststehend) oder am Trommelkörper (umlaufend) befestigt sind. Sie können auf ihrer ganzen Länge auf den Siebflächen aufliegen und reinigen diese laufend ab. Auch durch diese Einbauten wird die Zopfbildung erheblich erschwert. Mit Bezugszeichen 17 ist eine umlaufende Rolleiste prinzipiell dargestellt.

Die Reinigungskörper können auch an Reinigungseilen- oder Ketten befestigte Körper unterschiedlicher Form aus Metall, Beton, Naturstein, Holz, Kunststoff usw. sein. Sie liegen entweder dauernd oder zeitweise auf den Siebblechen auf und bewirken dort eine Art "Maleffekt", der einerseits die Zopfbildung verhindert, andererseits noch vorhandenes Haftkorn vom Trägermaterial befreit. Je nach Form, Material und Gewicht tragen solche Reinigungskörper auch zur Reinhaltung des Siebbodens selbst bei. Mit Bezugszeichen 18 ist ein solches umlaufendes Räumelement prinzipiell dargestellt.

Auch das in Fig. 2 dargestellte Schlagkreuz 31 wird durch eine, durch den Streigrohrsichter 3 führende Drehachse mit einem Antriebsmotor versehen, so daß dieses zwar feststehend, jedoch angetrieben wird. Es dient zum Auflockern des Grobgutstromes und damit zur gleichmäßigen Beschickung der nachfolgenden Sichtereinheit. Letzte Reste von Haftkorn werden vom Trägermaterial abgeschlagen und mit der Windelfraktion in der Sektion 7 abgesiebt.

Vorstehende Ausführungen belegen den Unterschied des erfindungsgemäßen Verfahrens mit entsprechenden Vorrichtungsanteilen im Vergleich zum herkömmlichen Stand der Technik. Restabfälle aus Haushalten sind in der Vergangenheit vielfach auf ihre Inhaltsstoffe untersucht worden. Die Ergebnisse hierüber waren nicht überraschend. In Restabfällen aus Haushalten ist alles enthalten, was irgendwann einmal produziert wurde und was sich in das Fassungsvermögen herkömmlicher Abfallgefäße verstauen läßt.

Eine Ausnahme stellen sogenannte "Sekundärrohstoffe" dar, die vom Bürger entweder freiwillig oder aufgrund von Gesetzen oder Verordnungen anderen Verwertungsschienen zugeführt bzw. überlassen werden. Dies sind überwiegend Glas, Papier und neuerdings auch sogenannte Verkaufsverpackungen.

Die Vorteile des erfindungsgemäßen Verfahrens gegenüber dem Stand der Technik können nochmals wie folgt aufgezeigt werden.

Aus der Grobgutaufbereitung ergibt sich ein verbessertes Siebergebnis aufgrund der Multifunktionstrommel. Dabei erfolgt erst eine Siebung und erst später eine Zerkleinerung. Das Grobgut wird über einen Sortierstand geführt, um eine Qualitätssicherung durch Rückholung von Rest-Organic und flexibler Ausschleusung von Störstoffen zu erreichen. Eine Hygienisierung der "Windelfraktion" durch eine biologische Behandlung erfolgt nach Zerkleinerung.

Die nachfolgende biologische Behandlung ermöglicht eine optimale Vorbereitung zur Nachbehandlung des Restmülls. Die Nachbehandlung führt zu einer biologischen Trockenstabilisierung.

In der abschließenden Feingutaufbereitung erfolgt eine nahezu vollständige Verwertung des Feingutes durch kombinierte Sieb/Sichttechnik. Durch eine Abscheidung mineralischer Inertstoffe erfolgt eine stofflichen Verwertung oder PASi-gerechter Ablagerung ohne weitere Nachbehandlung. Schließlich erfolgt eine Abscheidung der Ersatzbrennstoffe (EBS).

Durch die nahezu vollständige Verwertung aller Restabfälle sind die zu erwartenden Behandlungskosten erheblich niedriger als bekannten Anlagen.
- 1.: Beschickungssystem
- 2.: Multifunktionstrommel
- 3.: Sichtereinheit
- 4.: Sortierstand
- 5.: Segment/Sektion
- 6.: Segment/Sektion
- 7.: Segment/Sektion
- 8.: stehende ??leisten
- 9.: Reißdorne
- 10.: Trommelrahmen
- 11.: Abstrafer
- 12.: Falleiste
- 13.: Trommeleinlauf
- 14.: biologische Stufe
- 15.: organikreiche Feinfraktior
- 16.: Forderleitung
- 17.: Raumleiste
- 18.: umlaufende Raumelemente
- 19.: Windelfraktion
- 20.: Sichter
- 21.: Schrägsortiermaschine
- 22.: Leitfraktionen
- 23.: Schwerfraktionen
- 24.: Leitung
- 25.: Entschrottungsvorrichtung
- 26.: Schrott
- 27.: Leitung
- 28.: Restschwerfraktion
- 29.: Zerkleinerungsanlage
- 30.: Pfeil
- 31.: angetriebenes Schlagkreuz
- 32.: Öffnung
- 33.: leichte Fraktion
- 34.: schwere Fraktion
- 35.: Leitung
- 36.: Rechteck
- 37.: Leitung
- 38.: Entschrottungs-vorrichtung
- 39.: Leitpfad
- 40.: Pfeil
- 41.: Leitung
- 42.: Leitung
- 43.: Sichterseitenwandung
- 44.: Pfeil
- 45.: Kante
- 46.: Zuluft
- 47.: Absetzkammer
- 48.: Lochblech
- 49.: Gehäuse
- 50.: Umluft
- 51.: Sichterkanal
- 52.: Drehwalze
- 53.: Umlenkkante
- 54.: Biogasanlage
- 55.: Entwässerungsstufe
- 56.: Trockungsstufe
- 57.: Behälter
- 58.: Gasmotor
- 59.: Generator
- 60.: Abgase
- 61.: Warmwasser
- 62.: Elektro Energie
- 63.: Abwasserreinigungs-anlage
- 64.: Abwasserentsorgung
- 65.: Aufbereitungsanlage
- 66.: Leitung
- 67.: Plansieb
- 68.: Plansieb
- 69.: Plansieb
- 70.: Plansieb
- 71.: Plansieb
- 72.: Plansieb
- 73.: Sichtsystem
- 74.: Sichtern
- 75.: Sichtern
- 76.: Sichtern
- 77.: Sichtern
- 78.: Sichtern
- 79.: Sichtern
- 80.: Leitung
- 81.: Zerkleinerer
- 82.: Leitung
- 83.: Fördersystem
- 84.: Trommelrahmen
- 85.: Stauscheibe
- 86.: Flachstahl
- 87.: Störstoff/Reststoffe
- 88.: Wertstoffe
- 89.: Biogas von 14
- 90.: Reststoffe von 14
- 91.: getrocknete Reststoffe
- 92.: Ersatzbrennstoffe
- 93.: Reststoffe

## Patentansprüche

1. Verfahren zu stofflichen und energetischen Verwertung von Resthausabfällen, mit folgenden Verfahrensschritten:
1) der unzerkleinerte Resthausabfall wird in einer Multifunktionstrommel (2) einer Feinstoff-, Grobstofftrennung unterzogen;
2) eine abgetrennte Schwerfraktion (34) wird auf einem Sortierstand (4) in Stör- bzw. Reststoffe (87) und Wertstoffe (88) aufgeteilt und getrennt weiter verarbeitet;
3) die der Multifunktionstrommel (2) entnehmbaren Feinstoffe (15) werden einer biologischen Behandlung in einer biologischen Stufe (14) unterzogen, bei welcher ein organischer Anteil in Biogas (89) umgesetzt wird und die verbleibenden Reststoffe (90) einer mechanischen Entwässerung (55) und einer nachfolgenden Trocknung (56) unterzogen werden;
4) die getrockneten Reststoffe (91) werden einer nachfolgenden mechanischen Feingut-Aufbereitungsanlagen (65) zugeführt, wobei durch Siebung (67 bis 72) und durch Sichtung (74 bis 79) eine Abtrennung von restlichen Wertstoffen (92) und Innertstoffen (93) erfolgt, wobei heizwertreiche, trockenstabile und lagerfähige sowie geruchsarme Ersatzbrennstoffe (92) zur energetischen Verwertung hergestellt werden.

2. Verfahren nach Anspruch 1, **dadurch gekennzeichnet, daß** die Multifunktionstrommel (2) und eine Sichtereinheit (3) eine bauliche Einheit bildet, wobei die Multifunktionstrommel (2) in vorzugsweise drei Sektionen (5 bis 7) aufgeteilt ist und einerseits zur Aussiebung einer organikreichen Fraktion (< 60mm) und andererseits zur Aussiebung einer sogenannten "Windelfraktione" (60 bis 150 mm) dient und wobei vorzugsweise im nachfolgenden Sichter (3) die Auftrennung in eine Leichtfraktion (33) und in eine Schwerfraktion (34) erfolgt.

3. Verfahren nach Anspruch 1 oder 2, **dadurch gekennzeichnet, daß** der Siebsektion (7) zur Abscheidung der Windelfraktion (19) ein Sichter (20) oder eine Schrägsortiermaschine (21) zur Auftrennung in Leicht- und Schwerfraktionen nachgeschaltet ist.

4. Verfahren nach Anspruch 3, **dadurch gekennzeichnet, daß** die Leichtfraktion aus dem Sichter (20) oder der Schrägsortiermaschine (21) einer biologischen Stufe (14) zuführbar ist und daß die Schwerfraktion (23) vorzugsweise einer Entschrottung (25), einer Zerkleinerung (29) und danach ebenfalls einer biologischen Stufe (14) zuführbar ist.

5. Verfahren nach einem der vorgenannten Ansprüche, **dadurch gekennzeichnet, daß** die.aus der Sichtereinheit (3) ausgetragene Leichtfraktion (33) als Folien oder dergleichen einer Verwertung (B1, B2) zuführbar ist.

6. Verfahren nach einem der vorgenannten Ansprüche, **dadurch gekennzeichnet, daß** die aus der Sichtereinheit (3) entnehmbare Schwerfraktion (34) gegebenenfalls nach einer Entschrottung (38) einem Hand-Sortierstand (4) zuführbar ist.

7. Verfahren nach einem der vorgenannten Ansprüche, **dadurch gekennzeichnet, daß** die biologische Stufe (14) eine biologische Behandlung und eine Biogaserzeugung umfaßt, wobei das Biogas einen Gasmotor (58) und dieser einen Generator (59) antreibt.

8. Verfahren nach einem der vorgenannten Ansprüche, **dadurch gekennzeichnet, daß** der biologischen Stufe (14) eine Entwässerungsstufe (55) und eine Trocknungsstufe (56) nachgeschaltet ist, wobei die Trocknungsstufe (56) eine biologische Trocknung oder eine thermische Trocknung umfaßt.

9. Verfahren nach einem der vorgenannten Ansprüche, **dadurch gekennzeichnet, daß** getrocknete Reststoffe (91) einer Feingut-Aufbereitungsanlage (65) zuführbar sind, die aus Plansieben und/oder Setztischen in Hintereinanderschaltung sowie nachgeschalteten Sichtern zusammengesetzt ist, wobei eine Auftrennung in brennbaren Wertstoffen (92, B4) und nicht brennbaren Inertstoffen (93, C) erfolgt.

10. Vorrichtung zur Durchführung des Verfahrens nach einem oder mehreren der vorgenannten Ansprüche, mit einer Multifunktionstrommel (2), die mehrere Sektionen (5 bis 7) umfasst, wobei wenigstens eine Sektion ein Siebnetz mit Öffnungen größer als 50 mm aufweist, wobei eine erste Sektion (5) ohne Siebnetz mechanische Mittel wie Stauleisten, Reisdorne oder dergleichen zur mechanischen Auftrennung und Auflockerung des Mülls umfasst, **dadurch gekennzeichnet, dass** eine nachfolgende Sektion (6) zur Austragung einer organikreichen Feinfraktion < 60 mm dient, dass in einer nachfolgenden dritten Sektion (7) die Aussiebung einer Windelfraktion mit einer Größe 60 bis 150 mm erfolgt und dass der Multifunktionstrommel (2) unmittelbar eine Sichtereinheit (3) zugeordnet ist, die zur Auftrennung von Leichtfraktionen (33) und Schwerfraktionen (34) dient.

11. Vorrichtung nach Anspruch 10, **dadurch gekennzeichnet, dass** der Multifunktionstrommel (2) ein Steigrohrsichter (3) unmittelbar zugeordnet ist, der sämtliche Fraktionen drucklos im freien Fall erzeugt, wobei vorzugsweise im Umluftbetrieb für die Leichtfraktion (33) eine aus Lochblechen hergestellte Absetzkammer (47) vorgesehen ist, in welcher die Leichtfraktion drucklos nach unten fällt und wobei vorzugsweise die Absetzkammer vollflächig von einer Abzugshaube (48) umfasst ist.

## Claims

1. Process for recycling and energy recovery of domestic waste with the following processing steps:
1. the unreduced domestic waste is separated into fine and coarse material in a multifunction drum (2);
2. the separated heavy fraction (34) is sorted manually (4) into harmful and residual material (87) and usable material (88) and further processed separately;
3. the fine materials (15) which can be taken from the multifunction drum (2) undergo a biological treatment in a biological stage (14) where an organic content is converted into biogas (89) and the remaining residue (90) undergoes mechanical dewatering (55) and subsequent drying (56);
4. the dried residue (91) is passed to a subsequent mechanical fine material processing station (65), wherein separation of the remaining usable materials (92) and inert materials (93) takes places as a result of screening (67 to 72) and sifting (74 to 79), wherein highly calorific, dry, stable and storable, as well as low odour replacement fuel material (92) is produced for energy recovery.

2. Process according to claim 1, **characterised in that** the multifunction drum (2) and a sifting unit (3) form one structural unit, with the multifunction drum (2) being divided into preferably three sections (5 to 7), and being used, on the one hand, to screen out a organic-rich fraction (< 60 mm) and, on the other hand, to screen out a "nappy fraction" (60 to 150 mm), and separation preferably taking place in a subsequent sifter (3) into light (33) and heavy (34) fractions.

3. Process according to claim 1 or claim 2, **characterised in that** the screen section (7) which separates the nappy fraction (19) is followed by a sifter (20) or an angled sorting machine (21) for separation into light and heavy fractions.

4. Process according to claim 3, **characterised in that** the light fraction from the sifter (20) or the angled sorting machine (21) can be passed to a biological stage (14), and **in that** the heavy fraction (23) is preferably passed to a scrap removal stage (25), a size reduction stage (29) and then also to a biological stage (14).

5. Process according to any of the preceding claims, **characterised in that** the light fraction (33) taken from the sifting unit (3) is passed as films or the like for recycling (B1, B2).

6. Process according to any of the preceding claims, **characterised in that** if necessary the heavy fraction (34), which can be taken from the sifting unit (3), is passed to a manual sorting unit (4) after a scrap removal stage (38).

7. Process according to any of the preceding claims, **characterised in that** the biological stage (14) includes a biological treatment and production of a biogas, the biogas driving a gas motor (58) which drives a generator (59).

8. Process according to any of the preceding claims, **characterised in that** the biological stage (14) is followed by a dewatering stage (55) and a drying stage (56), the drying stage (56) consisting of biological or thermal drying.

9. Process according to any of the preceding claims, **characterised in that** the dried residue (91) is passed to a fine material processing station (65), which consists of flat screens and/or settling tables connected in succession followed by sifters, wherein separation into combustible usable material. (92, B4) and non-combustible inert materials (93, C) takes place.

10. Device for carrying out the process according to one or more of the preceding claims, with a multifunction drum (2) comprising a plurality of sections (5 to 7), wherein at least one section has a screen net with openings larger than 50 mm and wherein a first section (5) without screen net comprises mechanical means such as baffle strips, ripping prongs or the like for mechanically separating and loosening the waste, **characterised in that** a following section (6) is used to extract an organic-rich fine fraction < 60 mm, **in that** in a following third section (7) a nappy fraction 60 to 150 mm in size is screened out, and **in that** a sifting unit (3) is directly associated with the multifunction drum (2), which unit is used to separate light fractions (33) and heavy fractions (34).

11. Device according to claim 10, **characterised in that** a rising pipe sifter (3) is directly associated with the multifunction drum (2), the sifter generating all the fractions in free fall without pressure, a settling chamber (47) made of perforated plates being provided preferably in circulating air mode for the light fraction (33), in which chamber the light fraction drops without pressure, and the settling chamber preferably being shrouded by an extraction hood (48).

## Revendications

1. Procédé de valorisation matérielle et énergétique des déchets ménagers comprenant les étapes suivantes :
1) les déchets ménagers non concassés subissent un tri de matière fine et de matière grossière dans un tambour multifonction (2) ;
2) une fraction lourde (34) triée est répartie en matières parasites ou sous-produits (87) et en matières de valeur (88) sur un niveau de triage (4) et est traitée ensuite séparément ;
3) les matières fines (15) pouvant être prélevées dans le tambour multifonction (2) subissent un traitement biologique dans une cellule biologique (14) au cours duquel une proportion organique de gaz biologique (89) est transformée et les sous-produits restants (90) subissent une suppression mécanique de l'humidité (55) et ensuite un séchage (56) ;
4) les sous-produits séchés (91) sont ensuite amenés dans une installation mécanique de préparation de fines fractions (65), grâce au tamisage (67 à 72) et au triage (74 à 79), un tri étant effectué entre les matières de valeur restantes (92) et les matières inertes (93), tandis que des combustibles de remplacement (92) présentant une certaine valeur calorifique, une certaine stabilité au séchage ainsi qu'une capacité au stockage et sans odeur, peuvent être fabriqués pour la valorisation énergétique.

2. Procédé selon la revendication 1,
**caractérisé en ce que**
le tambour multifonction (2) et une unité de séparation (3) forment une unité de construction, le tambour multifonction (2) étant réparti de préférence en trois sections (5 à 7) et sert, d'une part, à tamiser une fraction organique (< 60 mm) et, d'autre part, à tamiser une dite « fraction Windel » (de 60 à 150 mm), et le tri s'effectue de préférence dans le séparateur (3) suivant entre une fraction légère (33) et une fraction lourde (34).

3. Procédé selon la revendication 1 ou 2,
**caractérisé en ce qu'**
un séparateur (20) ou une trieuse en pente (21) sont connectés en aval de la section de tamisage (7) permettant de séparer la fraction Windel (19) afin de trier entre des fractions légères et des fractions lourdes.

4. Procédé selon la revendication 3,
**caractérisé en ce que**
la fraction légère provenant du séparateur (20) ou de la trieuse en pente (21) peut être amenée dans une cellule biologique (14), et la fraction lourde (23) peut être amenée de préférence vers une déferrisation (25), un concassage (29) et ensuite également un étage biologique (14).

5. Procédé selon l'une des revendications précédentes,
**caractérisé en ce que**
la fraction légère (33) provenant de l'unité de séparation (3) sous forme de feuilles ou une forme semblable peut être amenée vers une valorisation (B1, B2).

6. Procédé selon l'une des revendications précédentes,
**caractérisé en ce que**
la fraction lourde (34) provenant de l'unité de séparation (3) peut être amenée le cas échéant vers un niveau de triage manuel (4) pour une déferrisation (38).

7. Procédé selon l'une des revendications précédentes,
**caractérisé en ce que**
l'étage biologique (14) comprend un traitement biologique et une production de gaz biologique, le gaz biologique entraînant un moteur à gaz (58) entraînant à son tour un générateur (59).

8. Procédé selon l'une des revendications précédentes,
**caractérisé en ce qu'**
un étage d'élimination d'eau (55) et un étage de séchage (56) sont connectés en aval de l'étage biologique (14), l'étage de séchage (56) comprenant un séchage biologique ou un séchage thermique.

9. Procédé selon l'une des revendications précédentes,
**caractérisé en ce que**
les sous-produits séchés (91) peuvent être amenés dans une installation de préparation de fines (65), composée de cribles plats et/ou de tables de composition dans un montage en série ainsi que de séparateurs connectés en aval, une séparation étant effectuée entre les matières de valeur combustibles (92, B4) et les matières inertes non combustibles
(93, C).

10. Dispositif permettant d'exécuter le procédé selon une ou plusieurs des revendications précédentes, équipé d'un tambour multifonction (2) comprenant plusieurs sections (de 5 à 7), une section présentant au moins un tamis avec des ouvertures supérieures à 50 mm et une première section (5) sans tamis comprenant des moyens mécaniques tels que des baguettes de retenue, des mandrins à riz ou des moyens identiques pour assurer une séparation et une désagrégation mécaniques des ordures,
**caractérisé en ce qu'**
une section suivante (6) permet de défourner une fraction fine organique inférieure à 60 mm, dans une troisième section suivante (7) le tamisage d'une fraction Windel s'effectue à une taille comprise entre 60 et 150 mm, et le tambour multifonction (2) est immédiatement associé à une unité de séparation (3) qui permet de séparer les fractions légères (33) et les fractions lourdes (34).

11. Procédé selon la revendication 10,
**caractérisé en ce que**
le tambour multifonction (2) est immédiatement associé à un séparateur à colonne montante (3) produisant, toutes les fractions en chute libre sans pression, avec une chambre de décantation (47) en tôle perforée prévue pour la fraction légère (33) de préférence en fonctionnement à l'air ambiant, et dans laquelle la fraction légère tombe sans pression vers le bas, la chambre de décantation comprenant de préférence sur toute la surface une hotte d'extraction (48).
